# EUROPEAN PATENT APPLICATION

(11) **EP 1 955 890 A2**
(43) Date of publication of application: **13.08.2008**
(21) Application number: 08002105.8
(22) Date of filing: 05.02.2008
(51) Int. Cl.: B60N 2/14, A47C 3/18

(54) **Self-cleaning swivel assembly**

(30) Priority: 12.02.2007 US 705607
(71) Applicant: SEARS MANUFACTURING COMPANY, Davenport, Iowa 52808 (US)
(72) Inventor: Ropp, Dale, Buda, IL 61314 (US)
(74) Representative: Casey, Lindsay Joseph

(57) **Abstract**

The present invention is directed to a swivel seat assembly comprising a seat and a seat support. The seat support includes upper and lower swivel plates each having an annular recess or track (20,22). The lower plate track (22) has one or more openings (24). A plurality of ball bearings is disposed between the upper and lower plate track, with each of the ball bearings having a diameter greater than the width of the lower plate track. As a result, each of the ball bearings rides on the sides of the lower track and is spaced from the bottom of the track. The seat support also includes an annular retainer (18) having a plurality of apertures (26) and at least one wiper (28), with each aperture sized to receive one of the ball bearings and the wiper configured to direct debris from the lower plate recess into the one or more openings (24) of said lower plate recess.

## Description

### Background of the Invention

The present invention relates generally to seat design and more particularly to a swivel seat assembly. The swivel seat assembly made in accordance with the present invention finds advantageous use in seating employed in vehicle seating, such as trucks, earth moving equipment, agricultural equipment and other off the road vehicles.

There are a great variety of swivel seat designs now being used in vehicular seating. Some examples of such swivel seats are illustrated in United States Patents Nos. 5,482,354; 5,584,460; 5,599,065; 5,720,462; and 6,447,065. Although these designs are generally useful in their intended applications and some have found substantial commercial acceptance, they all none the less suffer from the disadvantage that dirt and debris may collect within the swivel assembly and, over time, may adversely affect the seat's swivel functionality. Most typically, dirt can collect in the lower track or raceway of the swivel assembly, making it more difficult for the swivel bearing assembly to function smoothly. In some extreme cases, the build up of dirt and debris may disable the swivel function entirely. In the designs of the prior art, the only way to regain the seat's original swivel function is to disassemble the swivel mechanism and clean the bearing assembly. However, once the seat is in the field, it is difficult, time consuming and costly to effect the necessary repair.

It would therefore be highly desirable to implement a self cleaning swivel seat design that overcomes this persistent problem. The present invention is directed to just such a design.

### Summary of the Invention

According to an aspect of the present invention, there is provided a swivel seat assembly as specified in claim 1. The invention is also directed to a method by which the described apparatus operates and including method steps for carrying out every function of the apparatus.

The present invention is directed to a swivel seat assembly comprising a seat and a seat support. The seat support includes upper and lower swivel plates each having an annular recess or track. The lower plate track has one or more openings. A, plurality of ball bearings is disposed between the upper and lower plate track, with each of the ball bearings having a diameter greater than the width of the lower plate track. As a result, each of the ball bearings rides on the sides of the lower track and is spaced from the bottom of the track. The seat support also includes an annular retainer having a plurality of apertures and at least one wiper, with each aperture sized to receive one of the ball bearings and the wiper configured to direct debris from the lower plate recess into the one or more openings of said lower plate recess.

The design of the present invention results in a self cleaning function. As the seat swivels in normal use, the bearings roll on the lower track and, therefore, move relative to it. The bearings, by reason of their position within the retainer apertures, act as drivers to move the retainer relative to the lower track as well. This, in turn, causes the wiper, which forms a part of the retainer, to move relative to the lower track and to sweep or direct any dirt or debris which may have collected in the lower track into the lower track openings, thereby maintaining the lower track in a relatively dirt free condition and allowing the bearings to roll freely within the plate tracks.

### Brief Description of the Drawings

The novel features which are characteristic of the present invention arc set forth in the appended claims. However, the invention's preferred embodiments, together with further objects and attendant advantages, will be best understood by reference to the following detailed description taken in connection with the accompanying drawings in which:
Figure 1 is a perspective view of a conventional swivel scat support, but having internal constructions features hidden from view;
Figure 2 is an exploded perspective view of the embodiment of Figure 1, showing the internal construction features made in accordance with one embodiment of the present invention;
Figure 3 is an enlarged and partial perspective view more clearly illustrating the preferred embodiment of Figure 2;
Figure 4 is an enlarged cross section taken along line 4-4 of Figure 1; and
Figure 5 is a cross section taken along line 5-5 of Figure 4 and showing the manner in which the self cleaning function of the preferred embodiment is achieved.

### Detailed Description of the Preferred Embodiments

With reference now to the drawings, a swivel assembly 10 is shown having an upper plate 12 and a lower plate 14. These plates support and contain a plurality of bearings 16 and a retainer 18, so that the assembly 10 facilitates relative rotation between the two plates 12,14 and allows a seat mounted to the assembly 10 to swivel easily.

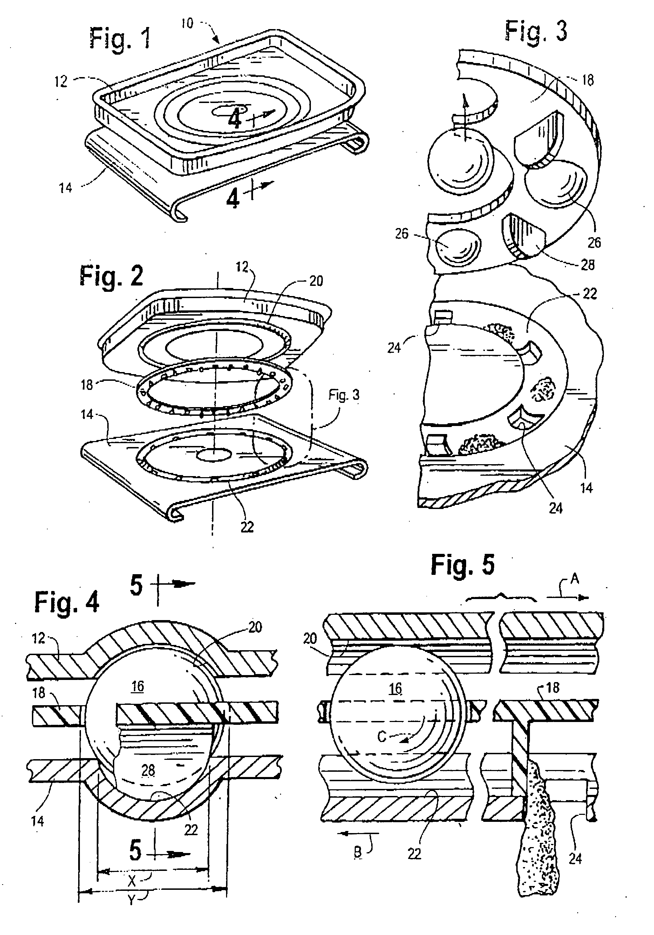

Each of the plates 12 and 14 is formed to provide annular recesses or tracks 20 and 22, respectively, which comprise races for bearings 16. In the prior art, the tracks arc typically sized so that the radius of the tracks generally match the radius of the bearings. In accordance with a preferred embodiment of the present invention and as shown in Figure 4, the lower track 22 has a width "X" which is smaller than the diameter "Y" of the bearing 16. In other words, the radius of the track is less than the radius of the bearing. As a result, the bearing 16 rides on the shoulders of lower track 22 and is spaced from the bottom of the track. By way of example, the width of the lower track or ball race may be 305 millimeters, with a bearing diameter 9/16 inches (14.2875mm).

In the preferred embodiment illustrated in the drawings, the lower track 22 is also provided with an opening or, preferably, a plurality of openings 24. Preferably the openings are positioned at or near the bottom of track 22 so as not to interfere with the rolling action of the bearings as they move relative to lower plate 14. The openings may be circular or rectangular and are, preferably, elongated slots. Again, by way of example, the openings may be 3 x 10 millimeter slots, with each positioned at equally spaced intervals around track 22. Preferably, twelve equally spaced openings are employed.

In addition to the plates and bearings, the swivel assembly 10 also includes a retainer 18 having a plurality of apertures 26 sized to receive the bearings 16 and maintain the bearings in fixed spaced relation around the circumference of tracks 20 and 22. Preferably, the retainer 18 is in the form of an annular and generally flat ring and has one or more depending wipers 28. Most preferably, the retainer 18 has a plurality of wipers spaced around its circumference, each wiper 28 having a size and configuration so that it closely conforms to the internal configuration of lower track 22.

The operation of the swivel assembly made in accordance with the illustrated preferred embodiment is illustrated generally in Figure 5. As the seat swivels, the plates 20 and 22 move relative to one another as depicted by arrows "A" and "B". This, in turn, causes the bearings 16 to roll as depicted by arrow "C" and since the bearings are rolling on the track 22, this causes the bearings to drive the retainer 18 and move it relative to both the upper and lower tracks. Importantly, since the retainer is moving relative to the lower track, the wipers 28 perform a sweeping action relative to the lower track, thereby directing dirt and debris that may have collected in the lower track into the lower track openings 24 and out of the track. This effectively self cleans the track 22 during the normal operation of the swivel and reduces the possibility that the swivel assembly will become less effective or fail over time.

Those of skill in the art will, understand and appreciate that various changes and modifications can be made to the preferred embodiments without departing from the spirit and teachings of the present invention. For example, the tracks 20 and 22 need not necessarily have a circular cross section, nor does the retainer have to be formed as one piece. These and other modifications apparent to those skilled in the art are all intended to be covered by the following claims.

## Claims

1. A swivel seat assembly, comprising:
a seat;
a support for the seat including upper and lower swivel plates each having an annular recess; the lower plate recess having one or more openings;
a plurality of ball bearings disposed between the upper and lower plate recesses, each of the ball bearings having a diameter greater than the width of the lower plate recess so that each of the ball bearings is spaced from the bottom of the recess; and
an annular retainer having a plurality of apertures and a wiper, with each aperture sized to receive one of the ball bearings and the wiper configured to direct debris from the lower plate recess into the one or more openings of said lower plate recess.

2. The swivel seat assembly of Claim 1 wherein the apertures in said retainer are equally spaced around the retainer and a plurality of wipers are employed with a wiper located between each pair of apertures.

3. The swivel plate assembly of Claim 1 or Claim 2 wherein each of the plate recesses is generally semicircular in cross section and the wiper has a generally semicircular shape.

4. The swivel plate assembly as claimed in any of Claims 1-3 wherein the lower plate recess has a plurality of openings and each opening comprises an elongated slot.

5. The swivel plate assembly of Claim 4 wherein each of the slots is positioned at the bottom of the lower plate recess.
